# FASCICULE DE BREVET EUROPEEN

(11) **EP 4 101 721 B1**
(45) Date de publication et mention de la délivrance du brevet: **26.02.2025**
(21) Numéro de dépôt: 22178437.4
(22) Date de dépôt: 10.06.2022
(51) Int. Cl.: B61D 17/18, B60R 13/02

(54) **KIT DE MONTAGE D'UN PANNEAU D'HABILLAGE À UNE CAISSE DE VÉHICULE DE TRANSPORT, CAISSE ET VÉHICULE COMPRENANT UN TEL KIT ET PROCÉDÉ DE MONTAGE ASSOCIÉ**
KIT ZUR MONTAGE EINER VERKLEIDUNGSPLATTE AN EINER KAROSSERIE EINES TRANSPORTFAHRZEUGS, KAROSSERIE UND FAHRZEUG MIT EINEM SOLCHEN KIT UND ENTSPRECHENDES MONTAGEVERFAHREN
KIT FOR MOUNTING A TRIM PANEL TO A BODY OF A TRANSPORT VEHICLE, BODY AND VEHICLE COMPRISING SUCH A KIT AND ASSOCIATED ASSEMBLY METHOD

(30) Priorité: 11.06.2021 FR 2106176
(43) Date de publication de la demande: 14.12.2022
(73) Titulaire: SpeedInnov, 75008 Paris (FR)
(72) Inventeur: BERNARD, Alexandre, 17340 Chatelaillon Plage (FR); CUNY, Nathalie, 17180 Périgny (FR); PREVOST, Thomas, 17340 Yves (FR)
(74) Mandataire: Lavoix

(56) Documents cités:
- EP-A1- 0 576 394
- WO-A1-2021/069307
- CN-U- 211 543 533
- US-A1- 2010 086 377

## Description

La présente invention concerne un kit de montage d'un panneau d'habillage à une caisse de véhicule de transport, une caisse et un véhicule comprenant un tel kit et un procédé de montage associé.

Dans le domaine des véhicules de transport de passagers, notamment ferroviaire, les véhicules comprennent une caisse délimitant un compartiment intérieur d'accueil des passagers. Pour des raisons de confort et de sécurité, la caisse est recouverte, du côté intérieur, de panneaux d'habillages. Certains de ces panneaux sont fixés au toit de la caisse et forment un plafond du compartiment intérieur. Les panneaux, qui peuvent atteindre de grandes dimensions - par exemple présenter une largeur comparable à une largeur de caisse de véhicule ferroviaire, et une longueur de plusieurs mètres -, sont fixés à la caisse par des dispositifs de fixations. La caisse comprend généralement des rails de fixation, qui sont orientés du côté intérieur et qui coopèrent avec les dispositifs de fixation. Lorsque le véhicule circule, la caisse génère des vibrations qui peuvent se transmettre aux panneaux d'habillage, ce qui est une source d'inconfort pour les passagers.

WO-01/05640-A1 décrit un dispositif de fixation qui intègre un élément amortissant et qui permet de suspendre un panneau d'habillage à un rail de fixation, le rail étant lié au toit d'une caisse de véhicule ferroviaire. L'élément amortisseur doit être inséré par coulissement dans le rail, ce qui rend peu pratique la mise en place des panneaux, en particulier lorsque ces panneaux présentent de grande dimensions. L'assemblage n'est en outre pas sécurisé.

CN-211 543 533-U décrit, quant à lui, un dispositif de fixation pour panneau d'habillage de caisse de véhicule ferroviaire. Le montage du panneau à la caisse n'est pas détaillé.

C'est à ces problèmes qu'entend plus particulièrement remédier l'invention, en proposant un kit de montage qui soit plus pratique d'utilisation, notamment lors de la mise en place de panneaux d'habillage.

À cet effet, l'invention concerne un kit de montage pour fixer un panneau d'habillage à une caisse d'un véhicule de transport, notamment ferroviaire, le kit de montage comprenant :
- un sous-ensemble de montage, comprenant :
   - un panneau d'habillage, destiné à être attaché à la caisse, de préférence en regard du toit, et
   - au moins un dispositif de fixation,

dans lequel le dispositif de fixation comprend :
   - une patte de fixation, configurée pour être fixée au panneau d'habillage,
   - une bride de fixation, configurée pour être fixée à la caisse, et
   - un élément amortisseur, qui relie la patte de fixation à la bride de fixation, l'élément amortisseur étant configuré pour limiter le passage des vibrations entre la patte de fixation et la bride de fixation,
alors que la bride de fixation est configurée pour être fixée à un rail de fixation solidaire de la caisse, et que la patte de fixation de chaque dispositif de fixation est fixée sur un bord du panneau d'habillage.

Selon l'invention, le kit de montage comprend au moins un support de maintien, chaque support de maintien comprenant :
- une portion d'assemblage, configurée pour être assemblée à un rail de fixation de manière réversible, de préférence à la main et sans outil, et
- une portion de soutien, configurée pour coopérer de manière réversible avec le sous-ensemble de montage lorsque la portion d'assemblage est assemblée au rail de fixation, de manière à maintenir chaque bride de fixation dans une position de montage en regard d'un rail de fixation.
et en ce que le support de maintien est configuré pour être démonté du rail de fixation une fois que la bride de fixation est fixée au rail de fixation en regard.

Grâce à l'invention, chaque dispositif de fixation est assemblé au panneau avant de fixer chaque dispositif de fixation au rail de fixation, ce qui est pratique et source de gain de temps. Le panneau d'habillage est temporairement fixé au rail de fixation au moyen des supports de maintien, les dispositifs de fixation étant alors situées en regard des rails de fixation et faciles à sécuriser. Le support de fixation limite la transmission des vibrations entre la caisse et le panneau, contribuant au confort des passagers du véhicule. Le panneau d'habillage étant autoporteur, chaque dispositif de fixation est fixé, d'une part, sur les bords longitudinaux du panneau et d'autre part, à la caisse. Lors du montage, les dispositifs de fixation sont accessibles, ce qui facilite le montage.

Selon des aspects avantageux mais non obligatoires de l'invention, un tel kit de montage peut incorporer une ou plusieurs des caractéristiques suivantes prises isolément ou selon toute combinaison techniquement admissible :
- l'élément amortisseur est réalisé en matériau élastomère, alors que la bride de fixation et la patte de fixation sont solidarisées l'une à l'autre par vulcanisation de l'élément amortisseur.
- La bride de fixation comprend en outre :
   - une portion d'attache, configurée pour être fixée au rail de fixation par un organe de fixation, la portion d'attache définissant un axe d'attache, et
   - une portion de retenue, qui ménage un volume d'accueil de l'élément amortisseur, le volume d'accueil étant ouvert suivant une direction d'ouverture, qui est orthogonale à l'axe d'attache ;
   alors que l'élément amortisseur comprend un volume de réception, qui est ménagé dans l'élément amortisseur et qui débouche de l'élément amortisseur parallèlement à la direction d'ouverture, et que la patte de fixation comprend, en outre :
   - une première portion, qui est reçue dans le volume de réception, et
   - une deuxième portion, qui est configurée pour être fixée sur le bord du panneau d'habillage.
- La portion de soutien comprend :
   - une première plaque, destinée à être mise en appui contre le bord du panneau, et
   - une deuxième plaque, destinée à être mise en appui sur une face interne du panneau d'habillage.

L'invention concerne également une caisse de véhicule, comprenant au moins un rail de fixation solidaire de la caisse, et un kit de montage tel que défini précédemment. Au moins un des supports de maintien est fixé sur le rail de fixation par la portion d'assemblage, tandis que le au moins un support de maintien coopère avec le sous-ensemble de montage, le sous-ensemble de montage étant dans une position d'assemblage, dans laquelle chaque bride de fixation est en regard d'un rail de fixation correspondant.

Avantageusement, la caisse présente une forme allongée parallèlement à un axe longitudinal et comprend au moins deux rails de fixation, qui sont disposés symétriquement de part et d'autre d'un plan longitudinal de la caisse, le plan longitudinal étant parallèle à l'axe longitudinal, alors que le panneau d'habillage comprend deux bords longitudinaux opposés, parallèles à l'axe longitudinal et situés de part et d'autre du plan longitudinal, au moins un dispositif de fixation étant fixé sur chaque bord longitudinal, et que chaque dispositif de fixation est fixé à un rail de fixation, de manière à maintenir le panneau d'habillage en regard du toit.

L'invention concerne enfin un véhicule de transport, notamment ferroviaire, comprenant une caisse telle que décrite précédemment.

Selon un autre aspect, l'invention concerne un procédé de montage d'un panneau d'habillage à une caisse et au moyen d'un kit de montage tels que décrits précédemment, le procédé de montage comprenant les étapes consistant à :
a) monter, de part et d'autre du plan longitudinal de la caisse, au moins un support de maintien sur chaque rail de fixation,
b) assembler, sur chaque bord longitudinal du panneau d'habillage, le dispositif de fixation pour former un sous-ensemble de montage,
c) placer ensuite le sous-ensemble de montage de manière que chaque support de maintien coopère avec le sous-ensemble de montage, le sous-ensemble de montage étant dans une position d'assemblage, dans laquelle le panneau d'habillage est en regard du toit et dans laquelle chaque bride de fixation est en regard d'un rail de fixation correspondant.

Avantageusement, le procédé de montage comprend une étape, postérieure à l'étape c), consistant à sécuriser la bride de fixation au rail de fixation en regard au moyen d'un organe de fixation, par exemple une vis à tête marteau, puis à démonter le support de maintien.

Ce procédé induit les mêmes avantages que ceux mentionnés ci-dessus au sujet du dispositif de fixation selon l'invention.

L'invention sera mieux comprise, et d'autres avantages de celle-ci apparaîtront plus clairement à la lumière de la description qui va suivre, d'un mode de réalisation d'un kit de montage, d'une caisse, d'un véhicule et d'un procédé de montage, conformes à son principe, donnée uniquement à titre d'exemple et faite en référence aux dessins annexés, dans lesquels :
- [Fig 1] la figure 1 est une coupe schématique d'un véhicule de transport conforme à l'invention ;
- [Fig 2] la figure 2 est une vue en perspective, suivant la flèche Il sur la figure 1, du véhicule de la figure 1, représentant un sous-ensemble de montage conforme à l'invention, certaines pièces étant cachées pour faciliter la lecture ;
- [Fig 3] la figure 3 est une coupe du détail III du sous-ensemble de montage de la figure 2, certaines pièces étant cachées pour faciliter la lecture, et
- [Fig 4] la figure 4 est une vue en perspective d'un sous-ensemble de montage et d'un support de maintien conformes à l'invention, observés suivant une flèche IV sur la figure 2.

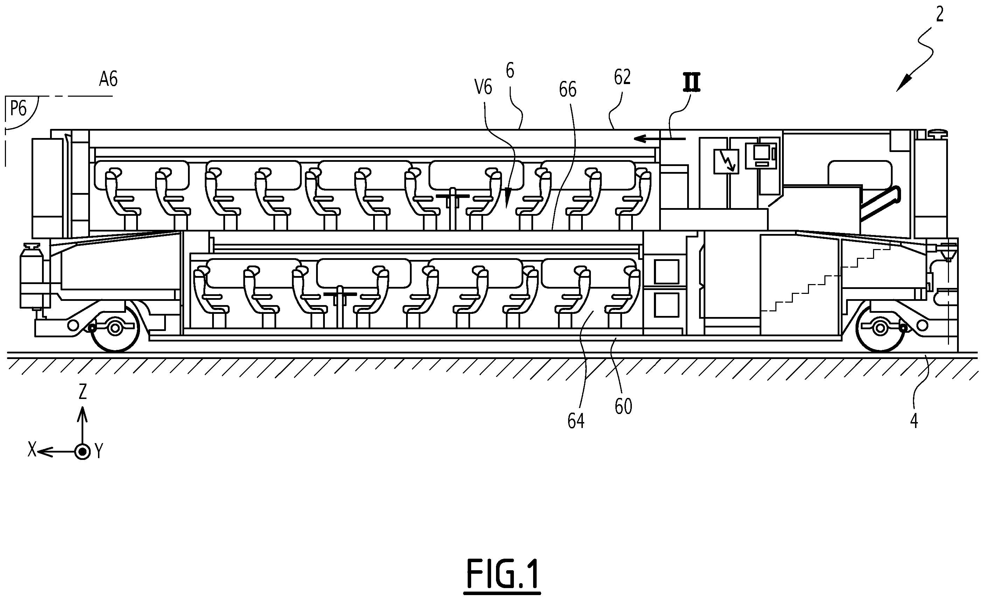

Un véhicule de transport 2 est représenté sur la figure 1. Le véhicule 2 est ici un véhicule ferroviaire, qui circule sur des rails 4 d'une voie ferrée. En variante, le véhicule 2 est un véhicule de transport routier, tel qu'un autocar, ou bien encore un véhicule de transport maritime ou aérien.

Les rails 4 sont supposés être ici rectilignes et horizontaux. Par commodité, on définit un axe X, qui est parallèle aux rails 4, un axe Y, qui est horizontal et orthogonal à l'axe X, et enfin un axe Z vertical. Les axes X, Y et Z forment ensemble un repère orthogonal direct.

Le véhicule 2 comprend une caisse 6, qui présente une forme allongée parallèlement à un axe longitudinal A6. L'axe longitudinal A6 est aussi une direction de déplacement du véhicule 2 et est ici parallèle à l'axe X. La caisse 6 comprend un plancher 60, un toit 62 et deux parois latérales 64. Les parois latérales 64 relient l'un à l'autre le plancher 60 et le toit 62 pour délimiter un compartiment V6, dans lequel sont accueillis les voyageurs. Dans l'exemple illustré, la caisse 6 comprend aussi un plancher intermédiaire 66, qui sépare le compartiment V6 en un compartiment haut 68A et un compartiment bas 68B. Le plancher intermédiaire est donc un plafond pour le compartiment bas 68B et un plancher pour le compartiment haut 68A.

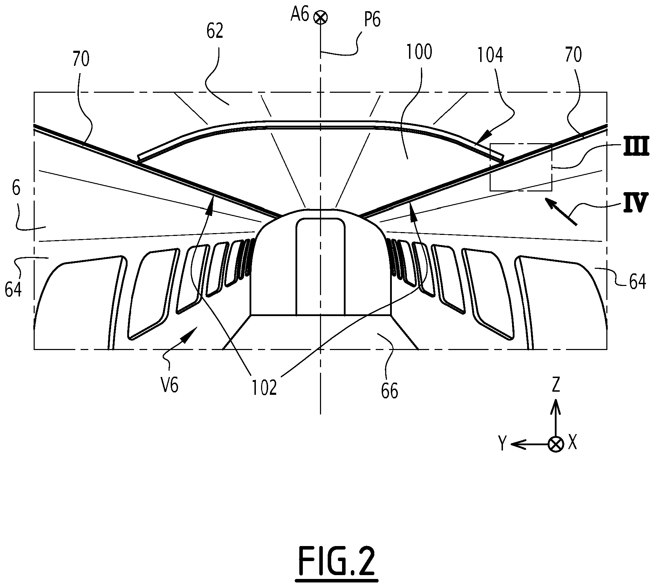

La caisse 6 est réalisée en métal, par exemple en acier ou en alliage d'aluminium. Pour le confort et la sécurité des passagers, les parois latérales 64 et le toit 62 sont recouverts de panneaux d'habillage, qui sont reliés à la caisse 6. Un panneau 100 d'habillage recouvrant le toit 62 est représenté sur les figures 2 à 4.

Le panneau 100 présente quatre bords opposés deux à deux, avec deux bords longitudinaux 102, qui sont ici rectilignes et parallèles à l'axe longitudinal A6, et deux bords transversaux 104, qui sont ici chacun situé dans un plan orthogonal à l'axe longitudinal A6 et présentent chacun un profil courbé, visible sur la figure 2, qui est similaire à un profil du toit 62. Le panneau 100 et le toit 62 présentent ici chacun un profil symétrique par rapport à un plan longitudinal P6, qui est parallèle à l'axe longitudinal A6 et à l'axe Z. Le plan longitudinal P6 est donc vertical lorsque la caisse 6 est posée sur des rails 4 horizontaux. Les bords longitudinaux 102 sont ainsi situés de part et d'autre du plan longitudinal P6.

Le panneau d'habillage 100 est maintenu à distance du toit 62, pour éviter la transmission de vibrations entre le toit 62 et le panneau d'habillage 100. Selon des exemples, des équipements et/ou des câbles du véhicule 2, fixés à la caisse 6, sont logés entre le panneau 100 et le toit 62. Ces équipements ou câbles ne sont pas représentés.

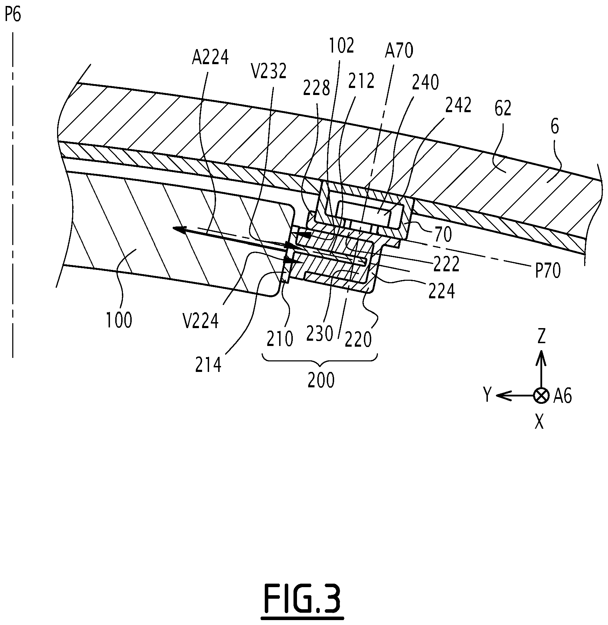

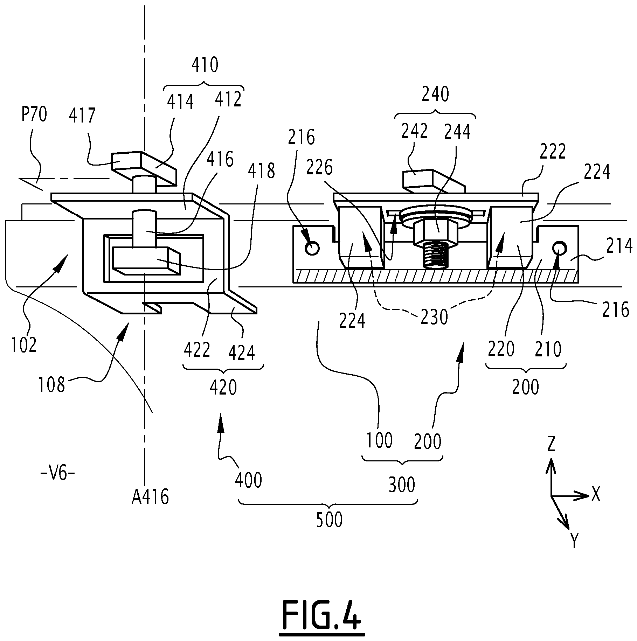

Le panneau d'habillage 100 est fixé à la caisse 6 par l'intermédiaire de dispositifs de fixation 200, qui sont visibles sur les figures 3 et 4. Chaque dispositif de fixation 200 comprend une patte de fixation 210, qui est configurée pour être fixée au panneau d'habillage 100, une bride de fixation 220, configurée pour être fixée à la caisse 6, et un élément amortisseur 230, qui relie la patte de fixation 210 à la bride de fixation 220. L'élément amortisseur 230 est configuré pour limiter le passage des vibrations entre la patte de fixation 210 et la bride de fixation 220.

L'élément amortisseur 230 est ainsi réalisé en un matériau propre à absorber les vibrations, tel qu'un matériau élastomère, par exemple du caoutchouc vulcanisé de type éthylène-propylène-diène monomère, dit aussi « EPDM ». La patte de fixation 210 et la bride de fixation 220 sont chacune réalisées en un matériau rigide, par exemple en métal tel que de l'acier.

La bride de fixation 220 comprend une portion d'attache 222 et une portion de retenue 224. Chaque portion d'attache 222 est configurée pour être fixée à un rail de fixation 70 de la caisse 6 au moyen d'un organe de fixation 240. Dans l'exemple illustré, la caisse 6 comprend deux rails 70, qui sont rectilignes et disposés symétriquement par rapport au plan longitudinal P6. Chaque rail de fixation 70 est solidaire de la caisse 6. Dans l'exemple illustré, chaque rail fait partie intégrante de la caisse 6 en étant réalisé d'une seule pièce avec le toit 62 et/ou les parois latérales 64. En variante, chaque rail 70 est rapporté à la caisse 6, par exemple par soudage ou encore par fixation mécanique. Chaque rail 70 est réalisé en un seul ou plusieurs morceaux.

Chaque rail de fixation 70 s'étend dans sa longueur parallèlement à l'axe longitudinal A6. Dans l'exemple de la figure 2, deux rails de fixation 70 sont représentés, ces deux rails 70 étant disposés symétriquement de part et d'autre du plan longitudinal P6. Chaque rail de fixation 70 présente ici un profil en forme de « C », l'ouverture du « C » étant orientée vers le compartiment V6 et le dos du « C », opposé à l'ouverture, étant orienté vers la caisse 6. Bien entendu d'autres formes de rail de fixation 70 sont possibles. L'ouverture du « C » définit un axe d'attache A70, qui est orthogonal au toit 62 à l'endroit où le rail 70 est relié à la caisse 6. L'ouverture en « C » définit aussi un plan d'attache P70, qui est orthogonal à l'axe d'attache A70.

La portion de retenue 224 ménage un volume d'accueil V224, visible sur la figure 3, dans lequel est reçu l'élément amortisseur 230. Le volume d'accueil V224 présente ici une section rectangulaire, avec deux côtés opposés orthogonaux à l'axe d'attache A70 et qui sont reliés par un troisième côté parallèle à l'axe d'attache A70, de manière que le volume V224 est ouvert du côté orienté vers le plan longitudinal P6, suivant une direction d'ouverture A224, représentée par une flèche sur la figure 3. La direction d'ouverture A224 est ici parallèle au plan d'attache P70.

L'élément amortisseur 230 comprend un volume de réception V232, qui est ménagé en creux dans le matériau de l'élément amortisseur 230. Le volume de réception V232 présente ici une forme de fente, qui est ménagée parallèlement au plan d'attache P70 et qui débouche de l'élément amortisseur 230 du même côté que le volume d'accueil V224, c'est-à-dire suivant la direction d'ouverture vers le plan longitudinal P6. Dans l'exemple illustré, le volume de réception V232 débouche de l'élément amortisseur 230 suivant une direction parallèle à la direction d'ouverture A224.

La patte de fixation 210 comprend une première portion 212, qui est reçue dans le volume de réception V232 et qui est solidaire de l'élément amortisseur 230, et une deuxième portion 214, qui est configurée pour être fixée sur l'un des bords longitudinaux 102 du panneau 100.

Dans l'exemple illustré, la patte de fixation 210 est formée par une tôle ou plaque de métal découpée et pliée, la première portion 212 étant insérée dans le volume de réception V232 en forme de fente. Ainsi, lors de la fabrication du dispositif de fixation 200, la bride de fixation 220 et la patte de fixation 210 sont solidarisées l'une à l'autre par vulcanisation de l'élément amortisseur 230. Le dispositif de fixation 200 est ainsi « indémontable », c'est-à-dire que séparer la patte de fixation 210 ou la bride de fixation 220 de l'élément amortisseur 230 nécessite de détruire l'élément amortisseur 230.

La deuxième portion 214 comprend ici des trous 216, prévus pour fixer la deuxième portion 214 au panneau d'habillage 100, au moyen d'organes de fixation. Ces organes de fixation, non représentés, sont par exemple des rivets ou des vis. Optionnellement, la deuxième portion 214 est collée au panneau d'habillage 100, en complément ou en remplacement des organes de fixation dans les trous 216. Un ou plusieurs dispositifs de fixation 200 assemblés à un même panneau d'habillage 100 forment un sous-ensemble de montage 300.

Le volume d'accueil V224 de la portion de retenue 224 et le volume de réception V232 ménagés dans l'élément amortisseur 230 sont tous les deux ouverts vers le plan longitudinal P6. Ainsi, lorsque le panneau d'habillage 100 et les dispositifs de fixation 200 sont en configuration assemblée, tel que représenté sur les figures 2 et 3, l'élément amortisseur 230 est maintenu en compression au sein du volume d'accueil V224, ce qui évite la génération de fissures au sein de l'élément amortisseur 230 et contribue à la durabilité du dispositif de fixation 200. La patte de fixation 210 et la bride de fixation 220 ne sont pas en contact direct l'une avec l'autre, mais sont reliées l'une à l'autre par l'élément amortisseur 230 : ainsi la transmission des vibrations entre la caisse 6 et le panneau d'habillage 100 est limitée par le dispositif de fixation 200.

La portion d'attache 222 présente ici une forme de plaque rectangulaire, qui s'étend dans sa longueur parallèlement à l'axe longitudinal A6 et présente deux extrémités comprenant chacune une portion de retenue 224. Un trou oblong 226 est ménagé dans une portion centrale de la portion d'attache 222, entre les deux portions de retenue 224, de manière à laisser passer l'organe de fixation 240. Un des grands côtés de la portion d'attache 222, situé du côté du plan longitudinal P6, présente ici une portion recourbée 228 qui coopère avec le profil du rail de fixation 70 pour permettre le bon positionnement du dispositif de fixation 200 par rapport au rail 70 lors du montage du panneau d'habillage 100.

L'organe de fixation 240 est de préférence réversible, c'est-à-dire que le sous-ensemble de montage 300 peut être démonté de la caisse 6. L'organe de fixation 240 comprend ici une vis 242 avec une tête de forme parallélépipédique allongée, dite aussi vis « à tête marteau », et un écrou 244. Sur la figure 3, la tête de la vis 242 est représentée au sein du rail de fixation 70, tandis que sur la figure 4, l'organe de fixation 240 est mieux visible, cependant le rail 70 n'est pas représenté.

De préférence, le panneau habillage 100 est « autoporteur », c'est-à-dire que le panneau d'habillage 100 ne s'affaisse pas sous son propre poids mais reste à distance du toit 62 simplement en étant maintenu par les dispositifs de fixation 200 répartis sur les bords longitudinaux 102. Lors du montage du panneau d'habillage 100 à la caisse 6, on assemble tout d'abord au moins un dispositif de fixation 200 sur chaque bord longitudinal 102 du panneau 100, pour former le sous-ensemble de montage 300. On comprend que selon la longueur des bords longitudinaux 102, le nombre de dispositifs de fixation 200 fixés à chacun des bords longitudinaux 102 est adapté pour soutenir le panneau d'habillage 100.

Lors de l'assemblage du sous-ensemble de montage 300 à la caisse 6, l'opérateur dispose avantageusement d'un support de maintien 400, représenté sur la figure 4. Le support de maintien 400 permet à l'opérateur de maintenir le sous-ensemble de montage 300 dans une position de montage, c'est-à-dire une position dans laquelle la bride de fixation 220 de chaque dispositif de fixation 200 est en regard d'un rail de fixation 70, alors que les organes de fixation 240 ne sont pas encore sécurisés.

Le support de maintien 400 comprend à cet effet une portion d'assemblage 410, configurée pour être assemblée à un rail de fixation 70 de manière réversible, et une portion de soutien 420, configurée pour coopérer avec le sous-ensemble de montage 300. Ainsi, lorsque la portion de montage 410 est assemblée au rail de fixation 70, le panneau d'habillage 100 est maintenu en regard du toit 62 et la portion d'attache 222 de chaque bride de fixation 220 se trouve en position de montage, en regard d'un rail de fixation 70.

Dans l'exemple illustré, la portion d'assemblage 410 comprend une portion d'appui 412, configurée pour être mise en appui contre le rail de fixation 70 parallèlement au plan d'attache P70, et un loquet 414, configuré pour assembler de manière réversible le support de maintien 400 au rail de fixation 70.

Le loquet 414 est avantageusement actionné par un opérateur à la main, et sans outil. Le loquet 414 comprend ici une tige 416, montée pivotante par rapport à la portion d'appui 412 autour d'un axe A416 sensiblement orthogonal à la portion d'appui 412. La tige 416 présente une première extrémité, orientée vers la caisse 6, sur laquelle est fixée une clavette 417, configurée pour coopérer avec le rail de fixation 70. La tige 416 comprend une deuxième extrémité, opposée à la première extrémité et orientée vers le compartiment V6, qui comprend une poignée 418, représentée ici par un parallélépipède, configurée pour être actionné par un opérateur, à la main et sans outils.

Bien entendu, en variante l'opérateur peut utiliser un outil pour actionner le loquet 414, par exemple un tournevis et/ou une clé, auquel cas la poignée 418 présente une forme complémentaire prévue à cet effet. Optionnellement, le loquet comprend un mécanisme d'indexation, non représenté, qui empêche le loquet 414 de se desserrer sans action d'un opérateur.

La portion de soutien 420 comprend ici une première plaque 422, destinée à être mise en appui contre le bord longitudinal 102 du panneau 100, ainsi qu'une deuxième plaque 424, en appui sur une face interne 108 du panneau d'habillage 100, la face interne 108 étant orientée vers le compartiment V6.

Ainsi, le sous-ensemble de montage 300 et le ou les supports de maintien 400, utilisés lors du montage du sous-ensemble 300 à la caisse 6, constituent ensemble un kit de montage 500. De préférence, le kit de montage 500 comprend autant de supports de maintien 400 que le sous-ensemble de montage 300 comprend de dispositifs de fixation 200. Dans l'exemple illustré, la caisse 6 comprend deux rails de fixation 70 disposés symétriquement de part et d'autre du plan longitudinal P6. Ainsi, au moins un support de maintien 400 est monté sur chaque rail de fixation 70. Ensuite, l'opérateur place le sous-ensemble de montage de manière que chaque support de maintien 400 coopère avec le sous-ensemble de montage, le panneau d'habillage 100 étant légèrement déformable élastiquement pour accommoder la mise en place du sous-ensemble de montage 300.

En résultat, le sous-ensemble de montage 300 est maintenu en regard du toit par les supports de maintien 400. L'opérateur sécurise ensuite chaque bride de fixation 220 au rail de fixation 70 correspondant situé en regard, au moyen d'un organe de fixation 240.

Ensuite, l'opérateur démonte le support de maintien 400 du rail 70, en actionnant ici le loquet 414. Le démontage du support de maintien 400 se fait aussi à la main et sans outils.

Les modes de réalisation et les variantes mentionnés ci-dessus peuvent être combinés entre eux pour générer de nouveaux modes de réalisation de l'invention.

## Revendications

1. Kit de montage (500) pour fixer un panneau d'habillage (100) à une caisse (6) d'un véhicule (2) de transport, notamment ferroviaire, le kit de montage comprenant :
- un sous-ensemble de montage (300), comprenant :
• un panneau d'habillage (100), destiné à être attaché à la caisse (6), de préférence en regard du toit (62), et
• au moins un dispositif de fixation (200),
dans lequel le dispositif de fixation (200) comprend :
- une patte de fixation (210), configurée pour être fixée au panneau d'habillage (100),
- une bride de fixation (220), configurée pour être fixée à la caisse (6), et
- un élément amortisseur (230), qui relie la patte de fixation (210) à la bride de fixation, l'élément amortisseur (230) étant configuré pour limiter le passage des vibrations entre la patte de fixation (210) et la bride de fixation (220),
alors que la bride de fixation (220) est configurée pour être fixée à un rail de fixation (70) solidaire de la caisse (6), et que la patte de fixation (210) de chaque dispositif de fixation (200) est fixée sur un bord (102) du panneau d'habillage,
**caractérisé en ce que** le kit de montage (500) comprend au moins un support de maintien (400), chaque support de maintien (400) comprenant :
- une portion d'assemblage (410), configurée pour être assemblée à un rail de fixation (70) de manière réversible, de préférence à la main et sans outil, et
- une portion de soutien (420), configurée pour coopérer de manière réversible avec le sous-ensemble de montage (300) lorsque la portion d'assemblage (420) est assemblée au rail de fixation (70), de manière à maintenir chaque bride de fixation (220) dans une position de montage en regard d'un rail de fixation (70),
et **en ce que** le support de maintien est configuré pour être démonté du rail de fixation une fois que la bride de fixation est fixée au rail de fixation en regard.

2. Kit de montage (500) selon la revendication précédente, dans lequel :
- l'élément amortisseur (230) est réalisé en matériau élastomère,
- la bride de fixation (220) et la patte de fixation (210) sont solidarisées l'une à l'autre par vulcanisation de l'élément amortisseur (230).

3. Kit de montage (500) selon l'une quelconque des revendications précédentes, dans lequel :
- la bride de fixation (220) comprend en outre :
• une portion d'attache (222), configurée pour être fixée au rail de fixation (70) par un organe de fixation (240), la portion d'attache (222) définissant un axe d'attache (A70), et
• une portion de retenue (224), qui ménage un volume d'accueil (V224) de l'élément amortisseur (230), le volume d'accueil (V224) étant ouvert suivant une direction d'ouverture (A224), qui est orthogonale à l'axe d'attache (A70) ;
- l'élément amortisseur (230) comprend un volume de réception (V232), qui est ménagé dans l'élément amortisseur (230) et qui débouche de l'élément amortisseur (230) parallèlement à la direction d'ouverture (A224), et
- la patte de fixation (210) comprend, en outre :
• une première portion (212), qui est reçue dans le volume de réception (V232), et
• une deuxième portion (214), qui est fixée sur le bord (102) du panneau d'habillage (100).

4. Kit de montage (500) selon l'une quelconque des revendications précédentes, dans lequel la portion de soutien (420) comprend :
- une première plaque (422), destinée à être mise en appui contre le bord (102) du panneau d'habillage (100), et
- une deuxième plaque (424), destinée à être mise en appui sur une face interne (108) du panneau d'habillage.

5. Caisse (6) de véhicule (2), comprenant :
- au moins un rail de fixation (70) solidaire de la caisse (6),
- un kit de montage (500) selon l'une quelconque des revendications 1 à 4,
dans lequel au moins un des support de maintien (400) est fixé sur le rail de fixation (70) par la portion d'assemblage (410),
dans lequel le au moins un support de maintien (400) coopère avec le sous-ensemble de montage (300), le sous-ensemble de montage (300) étant dans une position d'assemblage, dans laquelle chaque bride de fixation (220) est en regard d'un rail de fixation (70) correspondant.

6. Caisse (6) de véhicule (2) selon la revendication précédente, dans laquelle :
- la caisse (6) présente une forme allongée parallèlement à un axe longitudinal (A6) et comprend au moins deux rails de fixation (70), qui sont disposés symétriquement de part et d'autre d'un plan longitudinal (P6) de la caisse (6), le plan longitudinal étant parallèle à l'axe longitudinal (A6),
- le panneau d'habillage (100) comprend deux bords longitudinaux (102) opposés, parallèles à l'axe longitudinal (A6) et situés de part et d'autre du plan longitudinal (P6), au moins un dispositif de fixation (200) étant fixé sur chaque bord longitudinal (102),
dans laquelle chaque dispositif de fixation (200) est fixé à un rail de fixation (70), de manière à maintenir le panneau d'habillage (100) en regard du toit (62).

7. Véhicule (2) de transport, notamment ferroviaire, comprenant une caisse (6) selon la revendication précédente.

8. Procédé de montage d'un panneau d'habillage (100) à une caisse (6) conforme à la revendication 6 et au moyen d'au moins un kit de montage (500) conforme à l'une quelconque des revendications 1 à 4, **caractérisé en ce que** le procédé de montage comprend les étapes consistant à :
a) monter, de part et d'autre du plan longitudinal (P6) de la caisse (6), au moins un support de maintien (400) sur chaque rail de fixation (70),
b) assembler, sur chaque bord longitudinal (102) du panneau d'habillage (100), le dispositif de fixation (200) pour former un sous-ensemble de montage (300),
c) placer ensuite le sous-ensemble de montage (300) de manière que chaque support de maintien (400) coopère avec le sous-ensemble de montage (300), le sous-ensemble de montage (300) étant dans une position d'assemblage, dans laquelle le panneau d'habillage (100) est en regard du toit (62) et dans laquelle chaque bride de fixation (220) est en regard d'un rail de fixation (70) correspondant.

9. Procédé de montage selon la revendication précédente, dans lequel le procédé de montage comprend une étape, postérieure à l'étape c), consistant à sécuriser la bride de fixation (220) au rail de fixation (70) en regard au moyen d'un organe de fixation (240), par exemple une vis à tête marteau, puis à démonter le support de maintien (400).

## Patentansprüche

1. Montagesatz (500) zum Befestigen einer Verkleidungsplatte (100) an einem Wagenkasten (6) eines Transportfahrzeugs (2), insbesondere Schienenfahrzeugs, der Montagesatz umfassend:
- eine Montageunterbaugruppe (300), umfassend:
• eine Verkleidungsplatte (100), die dazu bestimmt ist, an dem Wagenkasten (6) befestigt zu werden, vorzugsweise in der Nähe des oder am Dach (62), und
• mindestens eine Befestigungsvorrichtung (200),
wobei die Befestigungsvorrichtung (200) Folgendes umfasst:
- eine Befestigungslasche (210), die konfiguriert ist, um an der Verkleidungsplatte (100) befestigt zu werden,
- einen Befestigungsflansch (220), der konfiguriert ist, um an dem Wagenkasten (6) befestigt zu werden, und
- ein Dämpfungselement (230), das die Befestigungslasche (210) mit dem Befestigungsflansch verbindet, wobei das Dämpfungselement (230) konfiguriert ist, um den Durchgang von Vibrationen zwischen der Befestigungslasche (210) und dem Befestigungsflansch (220) zu begrenzen,
während der Befestigungsflansch (220) konfiguriert ist, um an einer fest mit dem Wagenkasten (6) verbundenen Befestigungsschiene (70) befestigt zu werden, und dass die Befestigungslasche (210) jeder Befestigungsvorrichtung (200) an einem Rand (102) der Verkleidungsplatte befestigt ist,
**dadurch gekennzeichnet, dass** der Montagesatz (500) mindestens einen Haltebügel (400) umfasst, jeder Haltebügel (400) umfassend:
- einen Montageabschnitt (410), der konfiguriert ist, um reversibel, vorzugsweise von Hand und ohne Werkzeug, an einer Befestigungsschiene (70) montiert zu werden, und
- einen Stützabschnitt (420), der konfiguriert ist, um reversibel mit der Montageunterbaugruppe (300) zusammenzuwirken, wenn der Montageabschnitt (420) an der Befestigungsschiene (70) montiert wird, um jeden Befestigungsflansch (220) in einer Montageposition an einer Befestigungsschiene (70) zu halten,
und dass der Haltebügel konfiguriert ist, um von der Befestigungsschiene abgenommen zu werden, sobald der Befestigungsbügel an der anliegenden Befestigungsschiene befestigt ist.

2. Montagesatz (500) nach dem vorherigen Anspruch, wobei:
- das Dämpfungselement (230) aus einem Elastomermaterial gefertigt ist,
- der Befestigungsflansch (220) und die Befestigungslasche (210) durch Vulkanisieren des Dämpfungselements (230) fest miteinander verbunden sind.

3. Montagesatz (500) nach einem der vorherigen Ansprüche, wobei:
- der Befestigungsflansch (220) ferner Folgendes umfasst:
• einen Befestigungsabschnitt (222), der konfiguriert ist, um durch ein Befestigungselement (240) an der Befestigungsschiene (70) befestigt zu werden, wobei der Befestigungsabschnitt (222) eine Befestigungsachse (A70) definiert, und
• einen Halteabschnitt (224), der ein Aufnahmevolumen (V224) des Dämpfungselements (230) ausbildet, wobei das Aufnahmevolumen (V224) entlang einer Öffnungsrichtung (A224) offen ist, die orthogonal zu der Befestigungsachse (A70) ist;
- wobei das Dämpfungselement (230) ein Aufnahmevolumen (V232) umfasst, das in dem Dämpfungselement (230) ausgebildet ist und parallel zu der Öffnungsrichtung (A224) aus dem Dämpfungselement (230) heraus mündet, und
- die Befestigungslasche (210) ferner Folgendes umfasst:
• einen ersten Abschnitt (212), der in dem Aufnahmevolumen (V232) aufgenommen ist, und
• einen zweiten Abschnitt (214), der an dem Rand (102) der Verkleidungsplatte (100) befestigt ist.

4. Montagesatz (500) nach einem der vorherigen Ansprüche, wobei der Stützabschnitt (420) Folgendes umfasst:
- eine erste Platte (422), die dazu bestimmt ist, an dem Rand (102) der Verkleidungsplatte (100) anzuliegen, und
- eine zweite Platte (424), die dazu bestimmt ist, auf einer Innenseite (108) der Verkleidungsplatte anzuliegen.

5. Wagenkasten (6) eines Fahrzeugs (2), umfassend:
- mindestens eine Befestigungsschiene (70), die fest mit dem Wagenkasten (6) verbunden ist,
- einen Montagesatz (500) nach einem der Ansprüche 1 bis 4, wobei mindestens einer der Haltebügel (400) durch den Verbindungsabschnitt (410) an der Befestigungsschiene (70) befestigt ist,
wobei der mindestens eine Haltebügel (400) mit der Montageunterbaugruppe (300) zusammenwirkt, wobei sich die Montageunterbaugruppe (300) in einer Montageposition ist, in der jeder Befestigungsflansch (220) an einer entsprechenden Befestigungsschiene (70) anliegt.

6. Wagenkasten (6) eines Fahrzeugs (2) nach dem vorherigen Anspruch, wobei:
- der Wagenkasten (6) eine längliche Form parallel zu einer Längsachse (A6) aufweist und mindestens zwei Befestigungsschienen (70) umfasst, die symmetrisch auf beiden Seiten einer Längsebene (P6) des Wagenkastens (6) angeordnet sind, wobei die Längsebene parallel zu der Längsachse (A6) ist,
- die Verkleidungsplatte (100) zwei gegenüberliegende Längsränder (102) umfasst, die parallel zu der Längsachse (A6) sind und sich auf beiden Seiten der Längsebene (P6) befinden, wobei an jedem Längsrand (102) mindestens eine Befestigungsvorrichtung (200) befestigt ist,
wobei jede Befestigungsvorrichtung (200) an einer Befestigungsschiene (70) befestigt ist, um die Verkleidungsplatte (100) in der Nähe oder am Dach (62) zu halten.

7. Transportfahrzeug (2), insbesondere Schienenfahrzeug, umfassend einen Wagenkasten (6) nach dem vorherigen Anspruch.

8. Montageverfahren einer Verkleidungsplatte (100) an einem Wagenkasten (6) nach Anspruch 6 und mittels mindestens eines Montagesatzes (500) nach einem der Ansprüche 1 bis 4, **dadurch gekennzeichnet, dass** das Montageverfahren Schritte umfasst, die aus Folgendem bestehen:
a) Montieren, auf beiden Seiten der Längsebene (P6) des Wagenkastens (6), mindestens eines Haltebügels (400) an jeder Befestigungsschiene (70),
b) Zusammensetzen, an jedem Längsrand (102) der Verkleidungsplatte (100), der Befestigungsvorrichtung (200), um eine Montageunterbaugruppe (300) zu bilden,
c) dann Platzieren der Montageunterbaugruppe (300), sodass jeder Haltebügel (400) mit der Montageunterbaugruppe (300) zusammenwirkt, wobei sich die Montageunterbaugruppe (300) in einer Montageposition ist, in der die Verkleidungsplatte (100) an dem Dach (62) ist und in der jeder Befestigungsflansch (220) an einer entsprechenden Befestigungsschiene (70) ist.

9. Montageverfahren nach dem vorhergehenden Anspruch, wobei das Montageverfahren einen Schritt nach Schritt c) umfasst, bei dem der Befestigungsflansch (220) an der anliegenden Befestigungsschiene (70) mittels eines Befestigungselements (240), beispielsweise einer Hammerkopfschraube, gesichert wird und anschließend der Haltebügel (400) demontiert wird.

## Claims

1. A mounting kit (500) for fixing a trim panel (100) to a body (6) of a transport vehicle (2), in particular a rail vehicle, the mounting kit comprising:
- a mounting sub-assembly (300), comprising:
• a trim panel (100), intended to be attached to the body (6), preferably against or near the roof (62), and
• at least one fixing device (200),
wherein the fixing device (200) comprises:
- a fixing lug (210), configured to be fixed to the cladding panel (100),
- a fixing flange (220), configured to be fixed to the body (6), and
- a damping element (230), which connects the fixing lug (210) to the fixing flange, the damping element (230) being configured to limit the passage of vibrations between the fixing lug (210) and the fixing flange (220),
while the fixing flange (220) is configured to be fixed to a fixing rail (70) integral with the body (6), and the fixing lug (210) of each fixing device (200) is fixed to an edge (102) of the trim panel,
**characterised in that** the mounting kit (500) comprises at least one holding bracket (400), each holding bracket (400) comprising:
- an assembly portion (410), configured to be assembled to a fixing rail (70) in a reversible manner, preferably by hand and without tools, and
- a support portion (420), configured to reversibly co-operate with the mounting sub-assembly (300) when the assembly portion (420) is assembled to the fixing rail (70), so as to hold each fixing flange (220) in a mounting position facing a fixing rail (70),
and **in that** the retaining bracket is configured to be removed from the fixing rail once the fixing flange is fixed to the facing fixing rail.

2. The mounting kit (500) according to the preceding claim, wherein:
- the damping element (230) is made of elastomer material,
- the fixing flange (220) and the fixing lug (210) are connected to each other by vulcanisation of the damping element (230).

3. A mounting kit (500) according to any one of the preceding claims, wherein:
- the fixing flange (220) further comprises:
• an attachment portion (222), configured to be fixed to the fixing rail (70) by a fixing member (240), the attachment portion (222) defining an attachment axis (A70), and
• a retaining portion (224), which provides a reception volume (V224) for the damping element (230), the reception volume (V224) being open in an opening direction (A224), which is orthogonal to the attachment axis (A70);
- the damping element (230) comprises a receiving volume (V232), which is formed in the damping element (230) and opens out of the damping element (230) parallel to the opening direction (A224), and
- the fixing lug (210) also comprises:
• a first portion (212), which is received in the reception volume (V232), and
• a second portion (214), which is fixed to the edge (102) of the trim panel (100).

4. A mounting kit (500) according to any one of the preceding claims, wherein the supporting portion (420) comprises:
- a first plate (422), designed to be placed against the edge (102) of the trim panel (100), and
- a second plate (424), designed to be placed against an internal face (108) of the trim panel.

5. Vehicle (2) body (6), comprising:
- at least one fixing rail (70) integral with the body (6),
- a mounting kit (500) according to any one of claims 1 to 4, in which at least one of the holding brackets (400) is fixed to the fixing rail (70) by the assembly portion (410),
in which the at least one holding bracket (400) cooperates with the mounting sub-assembly (300), the mounting sub-assembly (300) being in an assembly position in which each fixing flange (220) faces a corresponding fixing rail (70).

6. Body (6) for a vehicle (2) according to the preceding claim, in which:
- the body (6) has an elongated shape parallel to a longitudinal axis (A6) and comprises at least two fixing rails (70), which are arranged symmetrically on either side of a longitudinal plane (P6) of the body (6), the longitudinal plane being parallel to the longitudinal axis (A6),
- the cladding panel (100) comprises two opposite longitudinal edges (102), parallel to the longitudinal axis (A6) and located on either side of the longitudinal plane (P6), at least one fixing device (200) being fixed to each longitudinal edge (102),
in which each fixing device (200) is fixed to a fixing rail (70), so as to hold the cladding panel (100) facing the roof (62).

7. A transport vehicle (2), in particular a railway vehicle, comprising a body (6) according to the preceding claim.

8. A method of mounting a trim panel (100) to a body (6) in accordance with claim 6 and by means of at least one mounting kit (500) in accordance with any one of claims 1 to 4, **characterised in that** the method of assembly includes the steps consisting of:
a) mounting at least one holding bracket (400) on each fixing rail (70) on either side of the longitudinal plane (P6) of the body (6),
b) assembling, on each longitudinal edge (102) of the trim panel (100), the fastening device (200) to form a mounting sub-assembly (300),
c) then placing the mounting sub-assembly (300) so that each holding bracket (400) co-operates with the mounting sub-assembly (300), the mounting sub-assembly (300) being in an assembly position, in which the trim panel (100) is near the roof (62) and in which each fixing flange (220) faces a corresponding fixing rail (70).

9. Assembly method according to the preceding claim, in which the assembly method comprises a step, subsequent to step c), consisting of securing the fixing flange (220) to the adjacent fixing rail (70) by means of a fixing member (240), for example a hammer-head screw, and then dismantling the holding bracket (400).
